# EUROPEAN PATENT APPLICATION

(11) **EP 4 495 185 A1**
(43) Date of publication of application: **22.01.2025**
(21) Application number: 24744896.2
(22) Date of filing: 18.01.2024
(51) Int. Cl.: C08L 67/04, C08G 63/06, C08G 63/08, C08G 63/91, B29C 48/00, C08G 63/02

(54) **REACTIVE EXTRUSION COMPOSITION, METHOD FOR IMPROVING MECHANICAL PROPERTIES OF PLA/P(3HP) BLEND, AND PLA/P(3HP) BLEND PRODUCED THEREFROM**

(30) Priority: 20.01.2023 KR 20230008924; 31.01.2023 KR 20230012859; 15.01.2024 KR 20240006048
(71) Applicant: LG Chem, Ltd., Yeongdeungpo-gu Seoul 07336 (KR)
(72) Inventor: JEONG, Woongchan, Daejeon 34122 (KR); KIM, Hyunju, Daejeon 34122 (KR); LEE, Jeongyong, Daejeon 34122 (KR); MOON, Jungmi, Daejeon 34122 (KR); LEE, Myunghan, Daejeon 34122 (KR); LEE, Jungyong, Daejeon 34122 (KR); CHOI, Jong Young, Daejeon 34122 (KR); KIM, Chul Woong, Daejeon 34122 (KR)
(74) Representative: Hoffmann Eitle
(86) International application number: PCT/KR2024/000885
(87) International publication number: WO 2024/155116

(57) **Abstract**

The present application relates to a reactive extrusion composition, and a PLA/P(3HP) blend having enhanced mechanical property manufactured therefrom.

## Description

### FIELD OF THE INVENTION

The present application relates to a reactive extrusion composition, a method for enhancing mechanical properties of a PLA/P(3HP) blend, and a PLA/P(3HP) blend having enhanced mechanical property manufactured therefrom.

### BACKGROUND OF THE INVENTION

In recent years, the issue of environmental pollution is raising due to an increase in the quantity of polymer waste, and accordingly, research on biodegradable polymers has been actively conducted. PLA (poly(lactic acid)), which is a general-purpose biodegradable polymer, has excellent thermal processability, mechanical properties, chemical resistance, and economic feasibility, and thus can replace other existing petrochemical products, but there is a disadvantage that elongation and impact resistance are low due to its stiff molecular structure. Therefore, it has been considered enhancing the physical properties of PLA through modification with a plasticizer or copolymerization or blending with a highly flexible polymer.

In copolymerization or blending with PLA, P(3HP) can be considered. P(3HP) is a biodegradable polymer with good flexibility and low thermal stability, but when blended with PLA, the low thermal stability of P(3HP) and low elongation and impact strength of PLA can be complemented.

However, even when using the blending method, it is important to apply conditions that can reduce the size of the dispersed phase between the resins to be mixed, increase the adhesive strength at the resin interface, and enhance the physical properties of the blend (e.g., mechanical and optical properties).

### SUMMARY OF THE INVENTION

### TECHNICAL PROBLEM

It is an object of the present application to provide a blend of PLA/P(3HP) having enhanced mechanical properties.

It is another object of the present application to provide a method for enhancing mechanical properties (e.g., elongation) of the resin blend.

The above objects and other objects of the present application can be all solved by the present application which is described in detail below.

### TECHNICAL SOLUTION

According to specific embodiments related to the present application, provided herein are a reactive extrusion composition, a method for enhancing mechanical properties of a PLA (poly(lactic acid)) and a P(3HP) (poly(3-hydroxypropionate)) blend, and a PLA/P(3HP) blend having enhanced mechanical property manufactured therefrom.

The inventors of the present application have conducted extensive research into a blend of PLA and P(3HP) having enhanced physical properties (e.g., mechanical properties such as tensile strength, elongation, etc.) as well as biodegradability, and completed the invention of the present application. Specifically, it is possible to use reactive extrusion to form a PLA-g-P(3HP) copolymer through an interfacial coupling reaction during the extrusion process in the mass production of the blends, wherein the PLA-g-P(3HP) copolymer can act as a compatibilizer to reduce the interfacial tension between the two phases. When the efficiency of such interfacial coupling reaction becomes high, a network structure in which the dispersed phase is smaller and more densely distributed can be formed, which makes it easier for impact energy to propagate and dissipate throughout the matrix, thereby improving impact resistance. In addition, as the amount of PLA-g-P(3HP) copolymer interface generated increases, the stretching resistance increases and the elongation at break can also be improved. On the other hand, when PLA and P(3HP) are simply blended, the interfacial adhesion between the two phases is low. Therefore, when force is applied, the force acts on the weak portion of the interface, thereby easily causing breakage.

Hereinafter, in order to improve the problems of the prior art and achieve the technical object of the present application, a reactive extrusion composition of predetermined components, a reactive extrusion method performed under specific conditions, and a PLA/P (3HP) blend manufactured therefrom will be described in more detail.

In one embodiment related to the present application, this application relates to a reactive extrusion composition. Through the description, the reactive extrusion composition is intended for use in reactive extrusion, and may be a composition containing the components described below. Alternatively, the reactive extrusion composition may mean a composition that satisfies a predetermined complex viscosity when heated (for example, it may be heated in a temperature range of 150 to 300°C). For example, provided is a reactive extrusion composition comprising 100 parts by weight of a resin component containing PLA and P(3HP); 0.2 to 15 parts by weight of a chain extender containing an epoxy group; and 0.2 to 15 parts by weight of a reactive compatibilizer, wherein the reactive compatibilizer contains an epoxy group and a vinyl group.

The composition further comprises a predetermined component in addition to PLA and P(3HP) in order to enhance the interfacial coupling reaction between the two phases, i.e., PLA (poly(lactic acid)) and P(3HP) (poly(3-hydroxypropionate)).

According to a specific embodiment of the present application, the reactive extrusion composition includes a resin component containing PLA and P(3HP); a reactive compatibilizer; and a chain extender. In the blend of PLA and P(3HP), when a reactive compatibilizer and a chain extender are mixed/reacted together, a synergistic effect occurs to improve the extrusion mixing performance (e.g. the size of the dispersed phase is small and the mixing performance can be improved), and the efficiency of the coupling reaction between the resin interfaces can become high.

In one exemplary embodiment, the resin component in the reactive extrusion composition may include 30 to 95% by weight of PLA and 5 to 70% by weight of P(3HP). Specifically, the content of PLA in the resin component may be, for example, 35% by weight or more, 40% by weight or more, 45% by weight or more, 50% by weight or more, 55% by weight or more, 60% by weight or more, 65% by weight or more, 70% by weight or more, 75% by weight or more, 80% by weight or more, 85% by weight or more, or 90% by weight or more. And, the upper limit of the content may be, for example, 90% by weight or less, 85% by weight or less, 80% by weight or less, 75% by weight or less, 70% by weight or less, 65% by weight or less, 60% by weight or less, or 55% by weight or less. P(3HP) may be included by a residual content excluding the above-mentioned PLA content, based on 100% by weight of the resin component. Within the above-mentioned content range, the low thermal stability of P(3HP) and the low elongation and impact strength of PLA can be complemented each other.

In one exemplary embodiment, PLA in the resin components may be used in an excessive amount relative to P(3HP). That is, a relatively excessive amount of PLA is a continuous phase, and a relatively small amount of P(3HP) is a dispersed phase. For example, the resin component may contain 70 to 90% by weight of PLA, and the remainder can be occupied by P(3HP). Specifically, the PLA content of the resin component may be 75% by weight or more, 80% by weight or more, or 85% by weight or more, and the upper limit of the content may be, for example, 85% by weight or less, 80% by weight or less, or 75% by weight or less. At this time, P(3HP) may be included in the resin component by an amount excluding the above-mentioned PLA content based on 100% by weight of the resin component.

The molecular weight of the resin component can be controlled at a level that can ensure the tensile strength and improved elongation at break, which will be described below.

In one exemplary embodiment, the PLA may have a weight average molecular weight in the range of 50,000 or more and 400,000 or less. Specifically, the PLA may have a weight average molecular weight of, for example, 60,000 or more, 80,000 or more, 100,000 or more, 120,000 or more, 140,000 or more, 150,000 or more, or 170,000 or more, and, for example, 350,000 or less, 320,000 or less, 300,000 or less, 250,000 or less, 230,000 or less, or 200,000 or less. If the weight average molecular weight of PLA is too low, the mechanical properties may be reduced, and if the weight average molecular weight of PLA is too large, the processability may be reduced.

In one exemplary embodiment, the P(3HP) may have a weight average molecular weight within the range of, for example, 2,000 or more and 200,000 or less. Specifically, the P(3HP) may have a weight average molecular weight of, for example, 5,000 or more, 7,000 or more, 10,000 or more, 13,000 or more, 15,000 or more, or 20,000 or more, and, for example, 150,000 or less, 130,000 or less, 100,000 or less, 80,000 or less, 70,000 or less, 50,000 or less, 40,000 or less, or 30,000 or less. If the weight average molecular weight of P(3HP) is too low, the mechanical properties may be reduced, and if the weight average molecular weight of P(3HP) is too large, the processability may be reduced.

In one exemplary embodiment, P(3HP) may have a lower molecular weight than PLA. In a specific embodiment of the present application, when PLA is used in an excessive amount relative to P(3HP), P(3HP) may have a molecular weight lower than PLA. Specifically, the inventors of this application have found through experimentation that: the chain extender described below selectively reacts with the P(3HP) phase rather than the PLA phase (i.e., the chain extender has a higher reactivity with P(3HP)); the chain extender selectively reacts with the dispersed phase P(3HP) dispersed in the continuous phase PLA, thereby increasing its molecular weight and viscosity; the viscosity difference between high molecular weight PLA and low molecular weight P(3HP) decreases through the chain extension reaction of P(3HP), thereby improving extrusion mixing performance (e.g., due to increase in a mixing efficiency, the dispersed phase P3HP breaks up less), and the increase in extrusion mixing performance promotes the coupling reaction with a reactive compatibilizer at the interface of PLA and P(3HP) to thereby increase compatibility (e.g., reduction in dispersed phase size) and interfacial adhesion between P(3HP) and PLA, and enhance tensile properties. At this time, the relatively high reactivity between the chain extender and P(3HP) is caused by the higher affinity between the two components by their chemical structures.

The type and/or content of the reactive compatibilizer and the chain extender contained in the composition together with the resin component may be determined at a level that can increase the interfacial coupling reaction between PLA and P(3HP) and achieve the technical object of the present application.

In the present application, the chain extender may be a component that selectively extends a P(3HP) chain in a PLA/P(3HP) blend, i.e., in a state where PLA and P(3HP) are mixed. For the P(3HP) which has selectively reacted with the chain extender, its viscosity and molecular weight are increased, which may reduce the viscosity difference between high molecular weight PLA and low molecular weight P(3HP), and also enhance the extrusion kneading efficiency and mechanical properties.

The type of the chain extender is not particularly limited as long as it does not impede the achievement of the technical object of the present application. For example, an epoxide compound, an anhydride compound, or an oxazoline compound may be used as the chain extender.

For example, the epoxide compound may contain a functional group such as 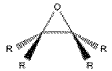 or a unit derived therefrom, the anhydride compound may contain a functional group such as 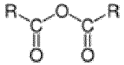 or a unit derived therefrom, and the oxazoline compound may contain a functional group such as 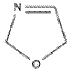 or a unit derived therefrom.

In one exemplary embodiment, as the chain extender, a chain extender containing at least one reactive functional group such as an epoxy group (glycidyl group) may be used. At this time, the chain extender may include, for example, 2 or more reactive functional groups, specifically 2 to 15 functional groups. Such chain extenders may include, but are not limited to, poly(alkylene glycol)diglycidyl ether (e.g., poly(ethylene glycol)diglycidyl ether, poly(propylene glycol)diglycidyl ether, etc.), trimethylolpropane triglycidyl ether, 1,4-butanediol diglycidyl ether, or the like.

In one exemplary embodiment, the weight average molecular weight of the chain extender may be 200 g/mol or more and 10,000 g/mol or less.

In one exemplary embodiment, the reactive extrusion composition may include 0.2 to 15 parts by weight of the chain extender, based on 100 parts by weight of the above-mentioned resin component. Specifically, the content of the chain extender may be 10 parts by weight or less or 5 parts by weight or less based on 100 parts by weight of the resin component, and the lower limit thereof may be 0.5 parts by weight or more, 1.0 parts by weight or more, 1.5 parts by weight or more, or 2.0 parts by weight or more. If the content is less than the above range, the physical property-improving effect is small, and if the content exceeds the above range, the physical properties may be deteriorated due to unreacted chain extender. Taking this into consideration, the chain extender may be included in the composition in the range of 0.2 to 5 parts by weight, based on 100 parts by weight of the resin component.

Further, the reactive extrusion composition may contain 1.0 to 15 parts by weight of the chain extender, based on 100 parts by weight of the PLA resin. Specifically, based on 100 parts by weight of the PLA resin, the content of the chain extender may be 10 parts by weight or less or 5 parts by weight or less, and the lower limit thereof may be 1.2 parts by weight or more, 1.3 parts by weight or more, 1.5 parts by weight or more, or 2.0 parts by weight or more.

The reactive compatibilizer may contain a reactive functional group capable of reacting with the chain end group (e.g., -OH or -COOH) of the polyester polymers PLA and P(3HP). The reactive functional group contained in the reactive compatibilizer may include at least one selected from, for example, an epoxy group, an isocyanate group, an isocyanurate group, and the like. Examples of the reactive compatibilizer containing an epoxy group include a compatibilized product such as Joncryl ADR, examples of the reactive compatibilizer containing an isocyanate group include poly(hexamethylene diisocyanate), and the like, and examples of the reactive compatibilizer containing an isocyanurate group include triglycidyl isocyanurate, and the like.

The reactive compatibilizer may include, for example, 1 to 30 or 3 to 30 reactive functional groups.

The reactive compatibilizer as described above may further include a vinyl group in addition to the reactive functional group.

In one exemplary embodiment, the reactive compatibilizer may include an epoxy group, that is, it may be an epoxy group-containing reactive compatibilizer. Further, the reactive compatibilizer may contain an epoxy group and a vinyl group, that is, it may be a polymer containing an epoxy group and a vinyl group. As the reactive compatibilizer contains both an epoxy group and a vinyl group, the reaction efficiency and the raw material storage stability can be improved.

The molecular weight of the reactive compatibilizer can be determined considering the affinity solubility of the polymer and the penetration rate into the PLA phase. For example, the reactive compatibilizer may have a weight average molecular weight within the range of 1,000 g/mol or more and 15,000 g/mol or less, 3,000 g/mol or more and 13,000 g/mol or less, and 5,000 g/mol or more and 10,000 g/mol or less.

The epoxy equivalent weight is the number of reactive epoxy functional groups, which is related to the number of PLA and P3HP polymers bonded to the reactive compatibilizer. For example, the reactive compatibilizer may satisfy an epoxy equivalent weight of 200 g/eq or more and 600 g/eq or less, 250 g/eq or more and 550 g/eq or less, 300 g/eq or more and 500 g/eq or less, or 350 g/eq or more and 485 g/eq or less. If the epoxy equivalent weight exceeds the above range, the effect due to the use of the compatibilizer may be small, and if the epoxy equivalent weight is less than the above range, it may become excessively hard while forming a crosslinked polymer structure.

The vinyl group equivalent weight is the number of reactive vinyl functional groups, wherein the vinyl group is related to the number of PLA and P3HP polymers bonded to the reactive compatibilizer. For example, the reactive compatibilizer may satisfy a vinyl group equivalent weight of 100 g/eq or more and 1000 g/eq or less, 120 g/eq or more and 900 g/eq or less, 140 g/eq or more and 800 g/eq or less, and 170 g/eq or more and 700 g/eq or less, or 190 g/eq or more and 500 g/eq or less. If the vinyl group equivalent weight exceeds the above range, the effect due to the use of a compatibilizer may be small, and if the vinyl group equivalent weight is less than the above range, it may become excessively hard due to an increase in the degree of crosslinking.

In one exemplary embodiment, the reactive extrusion composition may contain 0.2 to 15 parts by weight of the reactive compatibilizer based on 100 parts by weight of the resin component. Specifically, based on 100 parts by weight of the resin component, the content of the reactive compatibilizer may be 10 parts by weight or less, or 5 parts by weight or less, and the lower limit thereof may be 0.3 parts by weight or more, 0.5 parts by weight or more, 0.6 parts by weight or more, or 1.0 parts by weight or more. If the content of the reactive compatibilizer is less than the above range, it is difficult to expect the compatibility-improving effect, and if the content of the reactive compatibilizer exceeds the above range, the mechanical properties of the blend material may deteriorate. Taking this into consideration, the reactive compatibilizer may be included in the composition in the range of 0.2 to 5 parts by weight, based on 100 parts by weight of the resin component.

In addition, the reactive extrusion composition may contain 1.5 to 15 parts by weight of the reactive compatibilizer based on 100 parts by weight of the PLA resin. Specifically, based on 100 parts by weight of the PLA resin, the content of the reactive compatibilizer may be 10 parts by weight or less, or 5 parts by weight or less, and the lower limit thereof may be 1.7 parts by weight or more, 1.8 parts by weight or more, or 2.0 parts by weight or more.

The reactive extrusion composition may further include an additive. Such an additive may be, for example, an antioxidant and/or a lubricant.

The lubricant is a component that can assist the flow of the extrudate and reduce the extrusion load. The specific type of the lubricant is not particularly limited. For example, the lubricant may include at least one selected from higher fatty acids having 10 to 20 carbon atoms or salts thereof. For example, stearic acid, zinc stearic acid, and the like may be used as the lubricant.

In one exemplary embodiment, the reactive extrusion composition may include a lubricant within a content range of 0.1 to 5 parts by weight, 0.2 to 3 parts by weight, or 0.4 to 2 parts by weight, based on 100 parts by weight of the resin component. If the content of the lubricant is less than the above range, it is difficult to expect the effect due to the addition of the lubricant. If the content of the lubricant exceeds the above range, the physical properties (impact resistance, heat resistance, transparency) of the resin may deteriorate.

The type of the antioxidant is also not particularly limited. For example, products such as Irganox 1010 or Irgafos 168 may be used.

The content of the antioxidant can be appropriately adjusted to a level that does not interfere with the technical object of the present application. For example, the reactive extrusion composition may include an antioxidant within the content range of 0.1 to 5 parts by weight, 0.2 to 3 parts by weight, or 0.5 to 2 parts by weight, based on 100 parts by weight of the resin component.

In one exemplary embodiment, the reactive extrusion composition may satisfy a complex viscosity at 185°C, 0.5% strain and 0.3 rad/s of 2,000 Pa.s or more. Specifically, the complex viscosity of the composition may be 2500 Pa.s or more, 3000 Pa.s or more, 3500 Pa.s or more, 4000 Pa.s or more, 4,500 Pa.s or more, 5000 Pa.s or more, 5500 Pa.s or more, 6000 Pa.s or more, 6500 Pa.s or more, 7000 Pa.s or more, 7500 Pa.s or more, or 8000 Pa.s or more. And, the upper limit thereof may be, for example, 25000 Pa.s or less, 20000 Pa.s or less, 15000 Pa.s or less, 10000 Pa.s or less, specifically 9000 Pa.s or less or 8000 Pa.s or less. A composition satisfying the above range is advantageous for providing a blend product having excellent extrusion processability and excellent mechanical properties.

In another embodiment related to the present application, this application relates to an extrusion method for enhancing the mechanical properties of a PLA and P(3HP) blend.

In a specific embodiment related to the present application, the extrusion method may be a reactive extrusion method. Specifically, the method may be a method comprising reacting a composition containing a compatibilizer and a chain extender in addition to PLA and P(3HP) under predetermined conditions in order to increase the interfacial coupling reaction between the two phases, i.e., PLA and P(3HP). Therefore, the extrusion mixing performance can be improved (e.g., the size of the dispersed phase is small and the mixing performance can be improved) and the efficiency of the PLA/P(3HP) interfacial coupling reaction may become high.

For example, provided is an extrusion method for manufacturing a PLA/P(3HP) blend, the method comprising a step of feeding a reactive extrusion composition comprising a resin component containing PLA and P(3HP), a chain extender and a reactive compatibilizer at a flow rate of 2.0 g/min or more and 7.0 g/min or less into an extruder having a stirring shaft rotating at 250 rpm or more in a temperature range of 110°C or more and 200°C or less, wherein the reactive extrusion composition contains 0.2 to 15 parts by weight of a chain extender and 0.2 to 15 parts by weight of a reactive compatibilizer based on 100 parts by weight of the resin component.

The method may include a step of feeding a reactive extrusion composition comprising a resin component containing PLA and P(3HP), a reactive compatibilizer, and a chain extender into an extruder controlled under predetermined conditions.

A content of PLA and P(3HP) contained in the resin component of the extrusion composition, a weight average molecular weight, a type and/or content of a reactive compatibilizer and a chain extender, and a type and/or content of an additive are the same as described above for the reactive extrusion composition.

The method of the present application can be performed under conditions controlled so that the blend manufactured from the reactive extrusion composition has excellent mechanical properties (e.g., improved elongation).

Specifically, the method may include a step of feeding the reactive extrusion composition at a flow rate of 2.0 to 7.0 g/min into an extruder having a stirring shaft rotating at 250 rpm or more in a temperature range of 110 to 200°C. As a result of experimental confirmation, when the reactive extrusion conditions are controlled as described above, excellent mechanical properties (e.g., elongation) may be imparted to a blend of PLA and P(3HP).

In one exemplary embodiment, the extruder may be controlled so as to have a temperature gradient in the transfer direction of the reactive extrusion composition within the extruder. At this time, the transfer direction may mean the direction in which the reactive extrusion composition fed into a feeding inlet of the extruder moves to a discharge outlet of the extruder.

The method of imparting a temperature gradient within the extruder is not particularly limited, and devices such as known sensors can be used.

In a specific embodiment of the present application, the method may be a method comprising dividing the extruder into at least three zones in the transfer direction, and imparting a temperature gradient for each area in each transfer direction (direction from a feeding inlet to a discharge outlet) to low temperature → high temperature → low temperature, or low temperature → high temperature → medium temperature. In this case, the respective areas can be called a first zone, a second zone, and a third zone in the transfer direction (direction from a feeding inlet to a discharge outlet).

For example, the method may be a method of imparting a temperature gradient by controlling the reactive extrusion composition feeding inlet side temperature of the extruder to a range of 120°C to 165°C, the reactive extrusion composition discharge outlet side temperature of the extruder to a range of 135°C to 180°C, and the temperature between the feeding inlet side and the discharge outlet side to a range of 170°C to 200°C. The feeding inlet side may be referred to as the first zone, the discharge outlet side may be referred to as the third zone, the area between the first zone and the third zone (i.e., between the feeding inlet side and the discharge outlet side) may be referred to as the second zone. As a result of experimental confirmation, when the reactive extrusion conditions are controlled as described above, it is more advantageous to impart excellent mechanical properties (e.g., elongation) to a blend of PLA and P(3HP).

In one exemplary embodiment, the method may be a method of imparting a temperature gradient such that the temperature of the second zone is higher than the temperatures of the first zone and the third zone.

In one exemplary embodiment, the method may be a method of imparting a temperature gradient such that the temperature of the first zone is higher than the temperature of the third zone.

In one exemplary embodiment, the method may be a method of imparting a temperature gradient such that the temperature of the third zone is higher than the temperature of the first zone.

In one exemplary embodiment, at least one of the first zone, the second zone or the third zone may be divided into at least two zones according to the temperature. For example, the first zone may be divided into a 1-1 zone and a 1-2 zone from the composition feeding inlet side to the discharge outlet side, and the third zone may be divided into a 3-1 zone and a 3-2 zone from the composition feeding inlet side to the discharge side. At this time, the 1-1 zone and the 1-2 zone can be controlled to the temperature range (120°C to 165°C) of the 1 zone, and the temperature of the 1-2 zone may be higher than that of the 1-1 zone. Further, the 3-1 zone and the 3-2 zone can be controlled within the temperature range of the above-mentioned third zone (135°C to 180°C), and the temperature of the 3-1 zone may be higher than that of the 3-2 zone.

In one exemplary embodiment, the rotation speed of the extruder shaft may be 300 rpm or more, 350 rpm or more, or 400 rpm or more, and the upper limit thereof may be, for example, 500 rpm or less, 450 rpm or less, 400 rpm or less, or 350 rpm or less. As a result of experimental confirmation, when the reactive extrusion conditions are controlled as described above, it is more advantageous in imparting excellent mechanical properties (e.g., elongation) to a blend of PLA and P(3HP).

In one exemplary embodiment, the extruder may include a rotor blade.

In one exemplary embodiment, the speed at which the reactive extrusion composition is fed or moved within the extruder may be 2.0 to 7.0 g/min. For example, the flow rate of the reactive extrusion composition may be 2.5 g/min or more, 3.0 g/min or more, 3.5 g/min or more, 4.0 g/min or more, 4.5 g/min or more, or 5.0 g/min or more, and the upper limit thereof may be, for example, 6.5 g/min or less, 6.0 g/min or less, 5.5 g/min or less, 5.0 g/min or less, 4.5 g/min or less, or 4.0 g/min or less. As a result of experimental confirmation, when the reactive extrusion conditions are controlled as described above, it is more advantageous in imparting excellent mechanical properties (e.g., elongation) to a blend of PLA and P(3HP).

In a specific embodiment of the present application, the method may be a method of feeding the reactive extrusion composition at a flow rate of 4.5 to 5.5 g/min into an extruder having a stirring shaft rotating at 250 to 350 rpm. As a result of experimental confirmation, when the reactive extrusion conditions are controlled as described above, higher elongation may be imparted to a blend of PLA and P(3HP).

In one exemplary embodiment, the residence time of the reactive extrusion composition in the extruder may be within the range of 220 to 300 seconds (sec). If the residence time is longer than the above-mentioned time, the polymer may decompose and the molecular weight may decrease. If the residence time is shorter than the above-mentioned time, the reaction may not occur sufficiently and thus, the molecular weight may decrease. The decrease in molecular weight leads to a decrease in mechanical properties such as tensile strength and elongation.

In another exemplary embodiment related to the present application, this application relates to a blend of PLA and P(3HP) having excellent mechanical properties. As used herein, a blend of PLA and P(3HP) may be referred to as a PLA/P(3HP) blend.

For example, provided is a PLA/P(3HP) blend manufactured by reactive extrusion, wherein PLA-g-P(3HP) copolymer exists at the PLA and P(3HP) interface, and the blend has a tensile strength of 25 MPa or more and an elongation at break of 20% or more. In this case, the tensile strength and the elongation at break can be measured according to ASTM D882, and the stretching speed can be measured under the condition of 30-50%/min (stretching speed that stretches the length of the initial sample by 30 to 50% per minute).

Specifically, the tensile strength of the PLA/P (3HP) blend may be, for example, 30 MPa or more, 35 MPa or more, 40 MPa or more, 45 MPa or more, or 50 MPa or more, and the upper limit thereof may be, for example, 70 MPa or less, 65 MPa or less, 60 MPa or less, 55 MPa or less, 50 MPa or less, 45 MPa or less, 40 MPa or less, or 35 MPa or less.

Specifically, the elongation at break of the PLA/P(3HP) blend may be, for example, 20% or more, 30% or more, 40% or more, 50% or more, 60% or more, more specifically, 70% or more, 80% or more, 90% or more, 100% or more, 110% or more, 120% or more, 130% or more, 140% or more, 150% or more, 160% or more, 170% or more, 180% or more, 190% or more, 200% or more, 210% or more, 220% or more, 230% or more, 240% or more, or 250% or more. And, the upper limit thereof may be, for example, 600% or less, 550% or less, 500% or less, 450% or less, 400% or less, 350% or less, 300% or less, 250% or less, or 200% or less. The PLA-g-P(3HP) copolymer existing at the interface is entangled with the polymer in the PLA and P(3HP) phases, which leads to an increase in the interfacial adhesion, so that when an external force (elongation) is applied, the resistance at the interface can increase (high elongation). On the other hand, the lack of entanglement by the PLA-g-P(3HP) copolymer in the PLA and P(3HP) phases leads to the formation of voids at the interface, which can easily tear the blend product (low elongation).

The blend has excellent mechanical properties such as tensile strength and elongation while being eco-friendly, which makes it useful as a material for daily necessities such as biodegradable films and biodegradable injection containers.

In another exemplary embodiment related to the present application, this application relates to an article comprising the above-mentioned blend.

Specifically, the article may be an injection product or a film. The injection articles can be manufactured, for example, in the form of a container. The film can be manufactured to have a thickness of, for example, about 1 mm or less, 0.5 mm or less, 0.3 mm or less, or 0.1 mm or less.

### ADVANTAGEOUS EFFECTS

According to specific embodiments of the present application, a PLA/P(3HP) blend that not only has eco-friendly characteristics such as biodegradability, but also has excellent extrusion processability and mechanical properties (e.g. tensile strength, elongation, etc.).

### BRIEF DESCRIPTION OF THE DRAWINGS

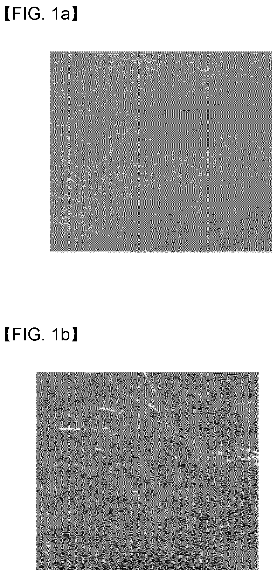

FIG. 1 is a photograph of a film-shaped blend of Example 1 (FIG. 1a) and Comparative Example 1 (FIG. 1b) taken under the same conditions. Specifically, each film was placed on a black background, and transparency was observed. When compared to Example 1, wrinkles occurred in the film of Comparative Example 1, and thus transparency was poor. This is because the extrusion kneading efficiency and processability of the extrusion composition of Comparative Example are poor.

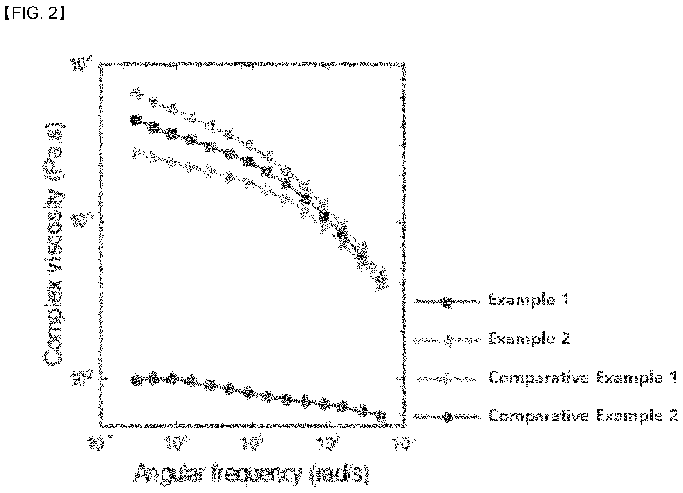

FIG. 2 shows diagram comparing the complex viscosities of Example 1-2 and Comparative Example 1-2.

### DETAILED DESCRIPTION OF THE EMBODIMENTS

Hereinafter, actions and effects of the invention will be described in more detail with reference to specific examples of the invention. However, these examples are presented for illustrative purposes only, and are not intended to limit the scope of the invention in any way.

### Preparation Example 1

A composition containing the following components was prepared.
PLA: NatureWorks 2003D (Mw: 170,000)
P(3HP): P(3HP) manufactured by LG Chem (Mw: 30,000)
Chain extenders: PEGDE (Poly(ethylene glycol) diglycidyl ether, Sigma-Aldrich), TMPTE (Trimethylolpropane triglycidyl ether, Sigma-Aldrich) (Compounds that each have an epoxy group and satisfy a weight average molecular weight of 200 to 10,000 g/mol)
Reactive compatibilizer: ADR-4400 (BASF) (a compound that contains an epoxy group and a vinyl group, has an epoxy equivalent weight of 485 g/eq, and satisfies a weight average molecular weight of 1,000 to 15,000 g/mol)
Lubricant: Zn-St(Zinc stearate)
Antioxidants: Irganox 1010 and Irgafos 168 in a 5:5 weight ratio

### Examples 1 to 4 and Comparative Examples 1 to 5

As the composition of Preparation Example 1, a mixture having the composition as shown in Table 1 below was reactively extruded using a co-rotating twin screw extruder (BA11 extruder from Bautech) (diameter(D) = 11 mm, length(L) / diameter(D) =40)), and the mechanical properties of the blend obtained according to the reactive extrusion conditions were evaluated using an extruder simulator (Ludovic v7).

Specifically, the flow rate in the extruder was adjusted to range of 4.5 to 5.5 g/min, and the rotation speed of the extruder was adjusted to 400 rpm. Further, the extruder was given a temperature gradient so that the average temperature of multiple areas sequentially located in the transfer direction (i.e. from a feeding inlet side to a discharge outlet side) was 140°C, 170°C, 185°C and 165°C. Under the above conditions, the residence time of the composition in the extruder was in the range of 220 to 300 seconds (sec). Regarding the evaluation of the tensile strength and elongation at break, the sample reactively extruded from the extruder was pressed with a hot press at 170°C to produce a specimen with a thickness of about 0.15 mm.

**[Table 1]**

| | Base resin (weight ratio) | Reactive compatibilizer (parts by weight*) | Chain extender (parts by weight) | Lubricant (parts by weight) | Antioxidant (parts by weight) |
|---|---|---|---|---|---|
| Example 1 | PLA 80 : P(3HP) 20 | 1.2 | PEGDE 2 | 0.4 | 0.5 |
| Example 2 | PLA 80 : P(3HP) 20 | 1.6 | PEGDE 2 | 0.4 | 0.5 |
| Example 3 | PLA 90 : P(3HP) 10 | 0.6 | PEGDE 1 | 0.4 | 0.5 |
| Example 4 | PLA 80 : P(3HP) 20 | 1.2 | TMPTE 2 | 0.4 | 0.5 |
| Comparative Example 1 | PLA 80 : P(3HP) 20 | - | PEGDE 2 | 0.4 | 0.5 |
| Comparative Example 2 | PLA 80 : P(3HP) 20 | 1.2 | - | 0.4 | 0.5 |
| Comparative Example 3 | PLA 100 : P(3HP) 0 | - | - | 0.4 | 0.5 |
| Comparative Example 4 | PLA 100 : P(3HP) 0 | 1.2 | - | 0.4 | 0.5 |
| Comparative Example 5 | PLA 100 : P(3HP) 0 | - | PEGDE 2 | 0.4 | 0.5 |
| * Parts by weight: refers to the respective contents of reactive compatibilizer, chain extender, lubricant, and antioxidant, based on 100 parts by weight of the base resin containing a predetermined amount of PLA and P (3HP). | | | | | |

### Examples 5 to 7 and Comparative Examples 6 to 9

As the composition of Preparation Example 1, a mixture having the composition as shown in Table 2 below was reactively extruded using a BA11 extruder from Bautech (diameter(D) = 11 mm, length(L) / diameter(D) =40), and the mechanical properties of the blend obtained according to the reactive extrusion conditions were evaluated using an extruder simulator (Ludovic v7).

Specifically, the flow rate in the extruder was adjusted to range of 4.5 to 5.5 g/min, and the rotation speed of the extruder was adjusted as listed in Table 2 below. Further, the extruder was given a temperature gradient so that the average temperature of multiple areas sequentially located in the transfer direction (i.e. from a feeding inlet side to a discharge outlet side) was 120°C, 160°C, 185°C, 175°C and 145°C. Under the above conditions, the residence time of the composition in the extruder was in the range of 220 to 300 seconds(sec). Regarding the evaluation of the tensile strength and elongation at break, the sample reactively extruded from the extruder was pressed with a hot press at 170°C to produce a specimen with a thickness of about 0.15 mm (specimen length 80 mm, width 6 mm).

**[Table 2]**

| | Resin component (weight ratio) | Additive component * (part by weight) | RPM |
|---|---|---|---|
| Example 5 | PLA 80 : P(3HP) 20 | A 1.2 : P 2 | 300 |
| Example 6 | PLA 80 : P(3HP) 20 | A 1.6 : P 2 | 300 |
| Example 7 | PLA 90 : P(3HP) 10 | A 0.6 : P 1 | 300 |
| Comparative Example 6 | PLA 100 | - | 200 |
| Comparative Example 7 | PLH* 100 | - | 200 |
| Comparative Example 8 | PLA 80 : P(3HP) 20 | A 1.2 : P 0 | 200 |
| Comparative Example 9 | PLA 80 : P(3HP) 20 | A 0 : P 2 | 200 |
| * PLH(Poly Lactate Hydracrylate): Block copolymer comprising units derived from PLA 90 and P(3HP) 10 on a weight ratio base. | | | |
| *Among the additive components, A means a reactive compatibilizer and P means a chain extender, and respective contents (parts by weight) are based on 100 parts by weight of the resin component. *The lubricant and antioxidant were used in the same amounts in respective samples (100 parts by weight of a resin component, 0.4 parts by weight of a lubricant, and 0.5 parts by weight of an antioxidant). | | | |

### Evaluation

The physical properties of the Examples and Comparative Examples were measured as follows, and the results are listed in Table 3 below.
(1) Complex viscosity: The complex viscosity of the reactive extrusion composition of PLA/P(3HP) was measured using a discovery hybrid rheometer DHR-3 (TA Instruments). When loading the sample, parallel plates with a diameter of 25.0 mm were used, and their gap was set to 1.0 mm. At this time, the complex viscosity was measured under dynamic strain frequency sweep mode at 185°C, 0.5% strain and frequency of 0.3 rad/s to 500 rad/s.
(2) Tensile strength: Measured according to ASTM D882 using UTM (Universal Testing Machine). The length and width of the sample were as specified in ASTM D882 standard, and a stretching speed of 40%/min (stretching 40% of the initial sample length per minute) was applied at room temperature (e.g., about 15-35°C without heating or cooling).
(3) Elongation at break: Measured according to ASTM D882 using UTM (Universal Testing Machine). The length and width of the sample were as specified in the ASTM D882 standard, and a stretching speed of 40%/min (stretching 40% of the initial sample length per minute) was applied at room temperature (e.g., about 15-35°C without heating or cooling).

**[Table 3]**

| | Complex viscosity (Pa.s) | Tensile strength (MPa) | Elongation (%) |
|---|---|---|---|
| Example 1 | 4384 | 39 | 120 |
| Example 2 | 6485 | 40 | 220 |
| Example 3 | 3676 | 44.5 | 170 |
| Example 4 | 3586 | 40.2 | 85 |
| Example 5 | - | 38.5 | 50.5 |
| Example 6 | - | 39.5 | 217.0 |
| Example 7 | - | 44.1 | 169.4 |
| Comparative Example 1 | 2710 | 34.5 | 2.9 |
| Comparative Example 2 | 98 | 33.5 | 4.5 |
| Comparative Example 3 | 4619 | 60 | 2.5 |
| Comparative Example 4 | 27650 | 72 | 4.9 |
| Comparative Example 5 | 4778 | 56 | 8.8 |
| Comparative Example 6 | - | 59.8 | 2.5 |
| Comparative Example 7 | - | 43.7 | 3.5 |
| Comparative Example 8 | - | 33.4 | 2.0 |
| Comparative Example 9 | - | 34.5 | 1.9 |

It can be confirmed that in Examples 1 to 7, an increase in the tensile elongation is large.

Unlike the same, even in the case of a PLA/P(3HP) blend, it can be seen that if neither the reactive compatibilizer nor the chain extender is used during reactive extrusion, the elongation at room temperature is poor (Comparative Examples 1, 2, 8, and 9). In addition, when extruding PLA alone, it can be seen that if neither the reactive compatibilizer nor the chain extender is used, the elongation is poor (Comparative Examples 3 and 6). When using a reactive compatibilizeralone, it can be seen that although the increase in viscosity is large, the elongation-improving effect is small (Comparative Example 4). **In** addition, when the chain extender is used alone, it is confirmed that the reactivity between the chain extender and PLA is low and the increase in viscosity is small (Comparative Example 5). Furthermore, it is confirmed that the elongation is poor even when PLH is extruded alone (Comparative Example 7).

## Claims

1. A reactive extrusion composition comprising:
100 parts by weight of a resin component comprising PLA and P(3HP);
0.2 to 15 parts by weight of a chain extender comprising an epoxy group; and
0.2 to 15 parts by weight of a reactive compatibilizer,
wherein the reactive compatibilizer comprises an epoxy group and a vinyl group.

2. The reactive extrusion composition according to claim 1, wherein:
the PLA has a weight average molecular weight greater than P(3HP).

3. The reactive extrusion composition according to claim 1, wherein:
the reactive compatibilizer has an epoxy group equivalent weight of 200 g/eq or more and 600 g/eq or less.

4. The reactive extrusion composition according to claim 1, wherein:
the reactive compatibilizer has a weight average molecular weight of 1,000 g/mol or more and 15,000 g/mol or less.

5. The reactive extrusion composition according to claim 1, wherein:
the PLA has a weight average molecular weight of 50,000 or more and 400,000 or less.

6. The reactive extrusion composition according to claim 1, wherein:
the P(3HP) has a weight average molecular weight of 2,000 or more and 200,000 or less.

7. The reactive extrusion composition according to claim 1, wherein:
the resin component contains 30 to 95% by weight of the PLA and 5 to 70% by weight of the P(3HP).

8. The reactive extrusion composition according to claim 1, wherein:
the chain extender containing an epoxy group has a weight average molecular weight of 200 g/mol or more and 10,000 g/mol or less.

9. The reactive extrusion composition according to claim 1, wherein:
the reactive extrusion composition further comprises a lubricant, and
wherein the lubricant is a fatty acid having 10 to 20 carbon atoms or a salt thereof.

10. The reactive extrusion composition according to claim 1, wherein:
the reactive extrusion composition further comprises an antioxidant.

11. The reactive extrusion composition according to claim 1, wherein:
the complex viscosity at 185°C, 0.5% strain and 0.3 rad/s is 2,000 Pa.s or more.

12. An extrusion method for manufacturing a PLA/P(3HP) blend, the method comprising feeding a reactive extrusion composition comprising a resin component comprising PLA and P(3HP), a chain extender and a reactive compatibilizer at a flow rate of 2.0 g/min or more and 7.0 g/min or less into an extruder having a stirring shaft rotating at 250 rpm or more in a temperature range of 110°C or more and 200°C or less,
wherein the reactive extrusion composition comprises 0.2 to 15 parts by weight of a chain extender and 0.2 to 15 parts by weight of a reactive compatibilizer based on 100 parts by weight of the resin component.

13. The extrusion method for manufacturing a PLA/P(3HP) blend according to claim 12, wherein:
the extruder has a temperature gradient in the transfer direction of the reactive extrusion composition within the extruder, wherein the transfer direction means a direction in which the reactive extrusion composition fed into a feeding inlet of the extruder moves to a discharge outlet of the extruder.

14. The extrusion method for manufacturing a PLA/P(3HP) blend according to claim 13, wherein:
the temperature of the first zone on the reactive extrusion composition feeding inlet side of the extruder is controlled to 120°C or more and 165°C or less,
the temperature of the third zone on the reactive extrusion composition discharge outlet side of the extruder is controlled to 135°C or more and 180°C or less,
the temperature of the second zone between the feeding inlet side and the discharge outlet side is controlled to 170 °C or more and 200 °C or less, and
a temperature gradient is applied such that the temperature of the second zone is higher than the temperatures of the first and third zones.

15. The extrusion method for manufacturing a PLA/P(3HP) blend according to claim 12, wherein:
the residence time of the reactive extrusion composition in the extruder is 220 seconds (sec) or more and 300 seconds (sec) or less.

16. The extrusion method for manufacturing a PLA/P(3HP) blend according to claim 12, wherein:
the reactive extrusion composition is fed at a flow rate of 4.5 g/min or more and 5.5 g/min or less into an extruder having a stirring shaft rotating at 250 rpm or more and 350 rpm or less.

17. The extrusion method for manufacturing a PLA/P(3HP) blend according to claim 12, wherein:
the reactive extrusion composition contains 1.5 to 15 parts by weight of a reactive compatibilizer and 1.0 to 15 parts by weight of a chain extender, based on 100 parts by weight of the PLA resin.

18. A PLA/P(3HP) blend which is a blend of PLA and P(3HP) manufactured by reactive extrusion,
wherein PLA-g-P(3HP) copolymer exists at the PLA and P(3HP) interface, and
wherein the blend has a tensile strength of 25 MPa or more and an elongation at break of 20% or more, provided that the tensile strength and the elongation at break are measured according to ASTM D882.
